# EUROPÄISCHE PATENTSCHRIFT

(11) **EP 2 149 483 B1**
(45) Veröffentlichungstag und Bekanntmachung des Hinweises auf die Patenterteilung: **26.03.2014**
(21) Anmeldenummer: 09009280.0
(22) Anmeldetag: 16.07.2009
(51) Int. Cl.: B60R 25/04, B60R 25/20

(54) **Verfahren zum Betreiben eines Fahrzeugs und entsprechendes Zündschloss**
Method for operating a vehicle and corresponding ignition lock
Procédé de fonctionnement d'un véhicule et interrupteur d'allumage correspondant

(30) Priorität: 28.07.2008 DE 102008035126
(43) Veröffentlichungstag der Anmeldung: 03.02.2010
(73) Patentinhaber: Volkswagen Aktiengesellschaft, 38440 Wolfsburg (DE)
(72) Erfinder: Wollenhaupt, Ralf, 38350 Helmstedt (DE); Michelsburg, Jürgen, 38165 Lehre (DE); Mench, Andree, 38304 Wolfenbüttel (DE); Borngräber, Ralf, Dr., 38165 Lehre (DE); Messmer, Dennis, 78647 Trossingen (DE); Willmann, Hubert, 78199 Bräunlingen (DE)
(74) Vertreter: Banzer, Hans-Jörg

(56) Entgegenhaltungen:
- DE-A1- 19 938 888
- US-A- 3 609 260

## Beschreibung

Die vorliegende Erfindung betrifft ein Verfahren zum Betreiben eines Fahrzeugs und ein entsprechendes Zündschloss für dieses Fahrzeug, welches gleichermaßen für rechtsgesteuerte und linksgesteuerte Fahrzeuge einsetzbar ist.

Die US 3,609,260 beschreibt einen Zündanlassschalter nach dem Stand der Technik, bei welchem ein Rotor in eine vorbestimmte Richtung zu drehen ist, um eine Zündung zu aktivieren oder einen Motor zu starten.

Die DE 199 38 888 A1 beschreibt ebenfalls einen Zündanlassschalter. Dabei sind mehrere Hallsensoren um eine Achse angeordnet, die jeweils bei Auftreten eines Magnetfelds ein Ausgangssignal abgeben. Jeweils genau eine Drehposition entspricht dabei KL_15 (Fahrbereitschaft) und KL_50 (Anlassen).

Nach dem Stand der Technik sind so genannte Drückkonzepte bekannt, wobei ein Fahrer einen Motor seines Fahrzeugs durch einen Drückvorgang startet. Dieses Drückkonzept ist für die meisten Fahrer ungewohnt und führt deshalb zu Fehlbedienungen. Darüber hinaus sind nach dem Stand der Technik so genannte Drehkonzepte bekannt, wobei der Motor über einen Drehvorgang, welcher über mehrere Raststellungen erfolgt, gestartet wird. Auch dieses Drehkonzept wird von den meisten Fahrern als umständlich angesehen.

Daher ist es die Aufgabe der vorliegenden Erfindung die nach dem Stand der Technik bekannten Nachteile zu überwinden.

Erfindungsgemäß wird diese Aufgabe durch ein Verfahren zum Betreiben eines Fahrzeugs nach Anspruch 1, ein Zündschloss für ein Fahrzeug nach Anspruch 9 und ein Fahrzeug nach Anspruch 11 erfüllt. Die abhängigen Ansprüche definieren bevorzugte und vorteilhafte Ausführungsformen der vorliegenden Erfindung.

Im Rahmen der vorliegenden Erfindung wird ein Verfahren zum Betreiben eines Fahrzeugs bereitgestellt. Dabei wird innerhalb des Fahrzeugs ein Bedienteil, insbesondere ein Zündschlüssel, des Fahrzeugs manuell gedreht, um einen Motor des Fahrzeugs zu starten. Dabei wird der Motor sowohl gestartet, wenn das Bedienteil nach rechts gedreht wird, als auch gestartet, wenn das Bedienteil nach links gedreht wird. Mit anderen Worten wird der Motor des Fahrzeugs sowohl durch eine Drehbewegung des Bedienteils nach rechts als auch durch eine Drehbewegung des Bedienteils nach links gestartet.

Eine Drehbewegung des Bedienteils nach rechts bzw. links liegt dabei genauer gesagt dann vor, wenn das Bedienteil um mehr als einen vorbestimmten Winkel nach rechts bzw. links gedreht wird. Dieser Drehvorgang des Bedienteils kann dabei von einem Taster erfasst werden, welcher betätigt wird, wenn das Bedienteil um mehr als den vorbestimmten Winkel nach rechts bzw. links gedreht wird.

Indem der Motor sowohl durch eine Drehung nach links als auch durch eine Drehung nach rechts gestartet werden kann, ist das Verfahren zum Betreiben des Fahrzeugs sowohl für rechts gesteuerte Fahrzeuge als auch für links gesteuerte Fahrzeuge gleichermaßen einsetzbar. Dadurch kann beispielsweise ein Zündschloss, welches entsprechend dem erfindungsgemäßen Verfahren arbeitet, sowohl bei rechts gesteuerten als auch bei links gesteuerten Fahrzeugen eingesetzt werden, ohne dass das Zündschloss vorher auf den rechts gesteuerten oder links gesteuerten Fahrzeugtyp angepasst werden muss. Anders ausgedrückt ist das Bedienkonzept für rechtsgesteuerte Fahrzeuge und linksgesteuerte Fahrzeuge identisch.

Ein Ausschalten des laufenden Motors erfolgt vorteilhafterweise, indem das Bedienteil nach rechts oder nach links gedreht wird.

Dabei kann das Bedienteil insbesondere nicht abgezogen werden, wenn der Motor läuft. Mit anderen Worten muss der Motor vorher durch eine Drehbewegung des Bedienteils nach rechts oder nach links ausgeschaltet werden, bevor das Bedienteil abgezogen werden kann.

Das Bedienteil ist dabei insbesondere nur dann drehbar, wenn das Bedienteil vorher bis zu einer vorbestimmten Position eingeschoben worden ist, wobei durch das Einschieben des Bedienteils bis zu dieser vorbestimmten Position ein dieser vorbestimmten Position entsprechender Betriebszustand des Fahrzeugs, beispielsweise ein Schließen des S-Kontakts, angenommen wird. Mit anderen Worten kann der Motor nur gestartet werden, wenn das Bedienteil vorher bis zu der vorbestimmten Position eingeschoben worden ist.

Dabei wird der Motor insbesondere nur dann gestartet, wenn beim Drehen des Bedienteils bei einem Automatikgetriebe gleichzeitig eine Bremse des Fahrzeugs gedrückt wird und eine Parkstellung eingestellt ist oder bei einem Schaltgetriebe des Fahrzeugs eine Kupplung des Fahrzeugs durchgetreten ist. Dadurch wird beispielsweise vermieden, dass der Motor im eingekuppelten Zustand, d.h. bei nicht-betätigtem Kupplungspedal, gestartet wird.

Auch die Zündung des Fahrzeugs kann sowohl durch die Drehbewegung des Bedienteils nach rechts als auch durch die Drehbewegung des Bedienteils nach links aktiviert werden, insbesondere bei nicht-betätigter Kupplung bei einem Schaltgetriebe bzw. bei nicht-betätigter Bremse bei einem Automatikgetriebe.

Eine Deaktivierung der aktivierten Zündung erfolgt ebenfalls durch die Drehbewegung des Bedienteils nach rechts oder links.

Bei eingeschalteter Zündung kann das Bedienteil nicht abgezogen werden, was bedeutet, dass zuerst die Zündung mit der entsprechenden Drehbewegung nach rechts oder links deaktiviert werden muss, bevor das Bedienteil abgezogen werden kann.

Nach einem manuellen Drehvorgang des Bedienteils kehrt das Bedienteil insbesondere automatisch in eine Ausgangslage zurück, d.h. das Bedienteil wird beispielsweise durch Federkraft aus jeder beliebigen Drehposition automatisch in diese Ausgangslage zurück gedreht. Dadurch entfällt die Notwendigkeit das Design und die Anmutung an unterschiedliche Drehpositionen des Bedienteils anzupassen. Das Design kann dadurch an eine einzige Drehposition, in welcher sich das Bedienteil vor und nach der Betätigung befindet, angepasst werden. Darüber hinaus bietet dieses Merkmal den Vorteil, dass das Bedienteil nicht manuell zurück gedreht werden muss.

Im Rahmen der vorliegenden Erfindung wird auch ein Zündschloss für ein Fahrzeug bereitgestellt. Dieses Zündschloss umfasst eine Bedienteilaufnahme, um ein Bedienteil, insbesondere einen Zündschlüssel, aufzunehmen und einen Rotor. Das Zündschloss ist derart ausgestaltet, dass das Zündschloss ein Signal zum Starten eines Motors des Fahrzeugs ausgibt, wenn der Rotor mittels des Bedienteils (um einen vorbestimmten Winkel) nach rechts gedreht wird, und dass das Zündschloss das Signal zum Starten des Motors auch ausgibt, wenn der Rotor mittels des Bedienteils (um den vorbestimmten Winkel) nach links gedreht wird.

Die Vorteile des erfindungsgemäßen Zündschlosses entsprechen im Wesentlichen den Vorteilen des erfindungsgemäßen Verfahrens, welche vorab im Detail diskutiert wurden, weshalb hier auf eine Wiederholung verzichtet wird.

Schließlich wird im Rahmen der vorliegenden Erfindung ein Fahrzeug mit einem erfindungsgemäßen Zündschloss bereitgestellt.

Die vorliegende Erfindung ist insbesondere für Fahrzeuge geeignet, welche mit einem Zündschlüssel gestartet werden. Selbstverständlich ist die vorliegende Erfindung nicht auf diesen bevorzugten Anwendungsbereich beschränkt, sondern ist prinzipiell auch für Fahrzeuge geeignet, welche beispielsweise über ein Keyless-Entry-System verfügen und bei welchen der Motor über einen erfindungsgemäßen Drehvorgang eines fest im Fahrzeug installierten Bedienteils gestartet wird. Darüber hinaus ist die vorliegende Erfindung auch bei Flugzeugen, Schiffen und gleisgebundenen Fahrzeugen einsetzbar.

Im Folgenden wird die Erfindung anhand bevorzugter Ausführungsformen mit Bezug auf die Figuren im Detail erläutert.

In Fig. 1 ist ein erfindungsgemäßes Zündschloss zum einen im Querschnitt mit einem eingeschobenen Schlüssel und zum anderen perspektivisch von vorn dargestellt.

In Fig. 2 ist links eine linke Drehposition des Schlüssels und rechts eine rechte Drehposition des Schlüssels zum Startern eines Motors dargestellt.

Fig. 3 stellt schematisch einen Übergang zwischen verschiedenen Schlüsselpositionen dar.

In Fig. 4 ist schematisch ein Fahrzeug mit einem erfindungsgemäßen Zündschloss dargestellt, welches ein Schaltgetriebe umfasst.

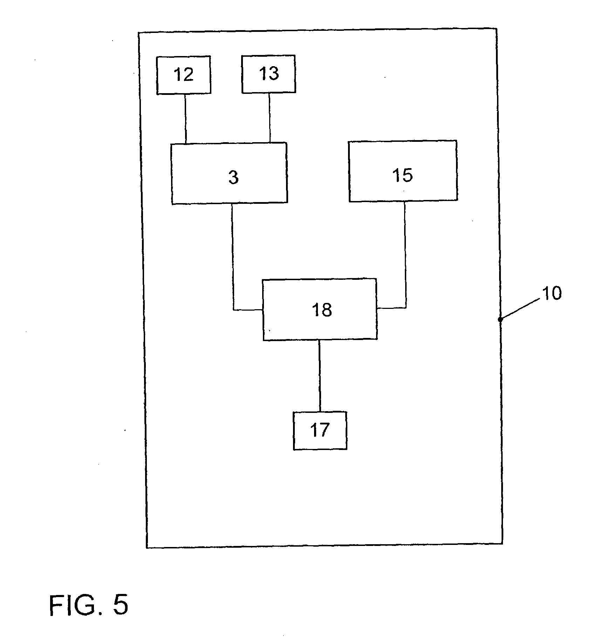

Dagegen ist in Fig. 5 schematisch ein Fahrzeug mit einem erfindungsgemäßen Zündschloss dargestellt, welches ein Automatikgetriebe umfasst.

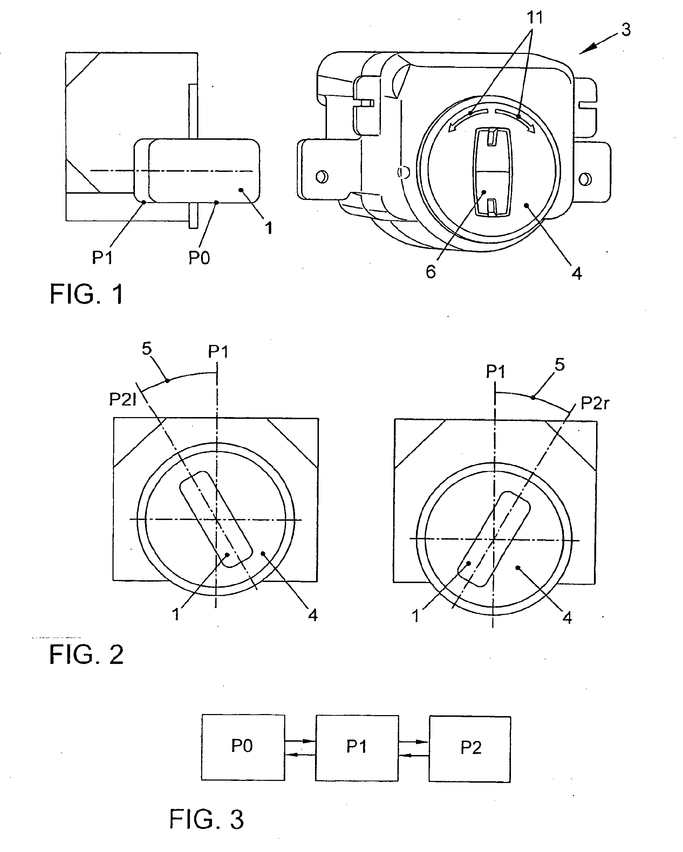

In Fig. 1 ist links ein erfindungsgemäßes Zündschloss 3 im Querschnitt mit einem eingeschobenen Schlüssel 1 dargestellt. Wenn der Schlüssel zu einer Position P1 in das Zündschloss 3 eingeschoben ist, wird ein Mikroschalter 2 oder Taster betätigt, wodurch das Zündschloss 3 aus einem Ruhezustand in einen ersten Betriebszustand übergeht, in welchem der S-Kontakt des Zündschlosses 3 betätigt ist, so dass beispielsweise ein Radio eines Fahrzeugs 10, in welchem das Zündschloss eingebaut ist, mit Energie versorgt wird. Sobald der Schlüssel 1 wieder aus dem Zündschloss 3 herausgezogen wird und zu Position P0 gelangt, wird der Mikroschalter 2 nicht mehr betätigt, wodurch das Zündschloss 3 wieder in den Ruhezustand übergeht.

Auf der rechten Seite der Fig. 1 ist perspektivisch das Zündschloss 3 von vorn dargestellt. Man erkennt einen Rotor 4 des Zündschlosses, welcher in eine der beiden dargestellten Drehrichtungen 11 gedreht werden kann, wenn der Schlüssel 1 in eine Schlüsselaufnahme 6 des Zündschlosses 3 eingeführt und zu der entsprechenden Seite gedreht wird.

In Fig. 2 sind die beiden Drehpositionen P2l, P2r dargestellt, über welche eine Zündung des Fahrzeugs aktiviert oder deaktiviert oder ein Motor des Fahrzeugs gestartet oder gestoppt werden kann. Mit Bezugszeichen 5 ist ein Winkel bezeichnet, um welchen der Schlüssel 1 oder genauer der Rotor 4 nach rechts oder nach links gedreht werden muss, um die Zündung zu aktivieren oder zu deaktivieren oder den Motor zu starten oder zu stoppen. Ob die entsprechende Drehposition P2l, P2r erreicht worden ist bzw. ob der Rotor 4 um den entsprechenden Winkel 5 nach rechts oder nach links gedreht worden ist, kann beispielsweise über einen Mikroschalter erfasst werden, welcher betätigt wird, wenn der Rotor 4 um den vorbestimmten Winkel 5 nach rechts oder nach links gedreht wird. Die jeweilige Ausgangsdrehposition ist in beiden in Fig. 2 dargestellten Fällen mit dem Bezugszeichen P1 dargestellt. Die Drehposition P1 nimmt der Rotor 4 und damit der Schlüssel 1 jeweils an, wenn keine manuelle Kraft von dem Fahrer auf den Schlüssel 1 und damit den Rotor 4 aufgebracht wird. Anders ausgedrückt dreht sich der Rotor 4 in die Drehposition P1 zurück, sobald der Schlüssel 1 losgelassen wird. Mit dem Bezugszeichen P1 soll auch zum Ausdruck gebracht werden, dass der Schlüssel 1 nur dann gedreht werden kann, wenn er sich in der Position P1 befindet, d.h. wenn der Schlüssel 1 bis zu der Position P1 in die Schlüsselaufnahme 6 eingeschoben ist.

In Fig. 3 ist der Übergang verschiedener Schlüsselpositionen dargestellt. Man erkennt dass der Schlüssel 1 ausgehend von der Position P0 nur über die Position P1 in die Position P2 gebracht werden kann. Das bedeutet, dass der Schlüssel nur dann die Drehposition P2 (besser P2l oder P2r) einnehmen kann, wenn er vorher bis zu der Position P1 in die Schlüsselaufnahme 6 eingeschoben worden ist. Während der Übergang von P0 nach P1, von P1 nach P0 und von P1 nach P2 jeweils manuell durch eine entsprechende Betätigung des Schlüssels durch den Fahrer erfolgt, erfolgt der Übergang von P2 nach P1 automatisch, da der Schlüssel 1 beispielsweise mittels Federkraft aus jeder Drehposition in die Drehposition P1 zurückgedreht wird.

Im Folgenden werden bestimmte Bedienvorgänge des erfindungsgemäßen Zündschlosses 3 beschrieben.
1. Der Schlüssel 1 wird in die Schlüsselaufnahme 6 des Zündschlosses 3 gesteckt und bis in die Position P1 eingeführt, wo er einrastet und der S-Kontakt geschlossen wird. Dadurch kann beispielsweise ein Radio des Fahrzeugs 10 betrieben werden.
2. Indem der Schlüssel 1 aus der Position P1 in die Position P2r oder P21 nach rechts oder nach links gedreht wird, wird die Zündung aktiviert, wenn sie vorher nicht aktiviert war. Nach diesem Drehvorgang kehrt der Schlüssel 1 in die Ausgangslage P1 zurück und wird in dieser Position P1 gehalten, was bedeutet, dass der Schlüssel 1 nicht aus der Schlüsselaufnahme 6 herausgezogen werden kann, solange die Zündung aktiviert ist. Die Zündung wird übrigens nur dann aktiviert, wenn die zum Start des Motors notwendigen Zusatzbedingungen (siehe Punkt 3 unten) nicht erfüllt sind.
3. Indem der Schlüssel in die Position P2r oder P2l nach rechts oder nach links gedreht wird, wird der Motor gestartet, wenn
   bei einem Schaltgetriebe die Kupplung gedrückt gehalten wird, oder
   bei einem Automatikgetriebe die Parkstellung eingestellt ist und die Bremse betätigt wird.
   Diese Bedingungen bezüglich des Schaltgetriebes oder des Automatikgetriebes sind die Zusatzbedingungen, welche bereits bei Punkt 2 erwähnt sind. Nach diesem Drehvorgang zum Starten des Motors kehrt der Schlüssel 1 in die Ausgangslage P1 zurück und wird in dieser Position P1 gehalten, was bedeutet, dass der Schlüssel 1 nicht aus der Schlüsselaufnahme 6 herausgezogen werden kann, solange der Motor läuft.
   Der Motor wird übrigens auch dann gestartet, wenn die Zündung vorher nicht aktiviert worden ist.
4. Um die aktive Zündung auszuschalten, wird der Schlüssel 1 in die Position P2r oder P2l nach rechts oder nach links gedreht. Die Zündung wird übrigens nur dann ausgeschaltet, wenn die zum Start des Motors notwendigen Zusatzbedingungen (siehe Punkt 3 oben) nicht erfüllt sind, da sonst der Motor gestartet wird (siehe Punkt 3 oben). Nach diesem Drehvorgang kehrt der Schlüssel 1 in die Ausgangslage P1 zurück und wird zum Abziehen freigegeben, was bedeutet, dass er aus der Schlüsselaufnahme 6 entfernt werden kann.
5. Um den laufenden Motor auszuschalten, wird der Schlüssel 1 in die Position P2r oder P21 nach rechts oder nach links gedreht. Nach diesem Drehvorgang kehrt der Schlüssel 1 in die Ausgangslage P1 zurück und wird zum Abziehen freigegeben, was bedeutet, dass er aus der Schlüsselaufnahme 6 entfernt werden kann.
6. Wenn der Schlüssel 1 zum Abziehen freigegeben ist und aus der Schlüsselaufnahme 6 und damit aus dem Zündschloss 3 herausgezogen wird, wird der S-Kontakt nicht mehr betätigt, wodurch beispielsweise das Radio stromlos wird.

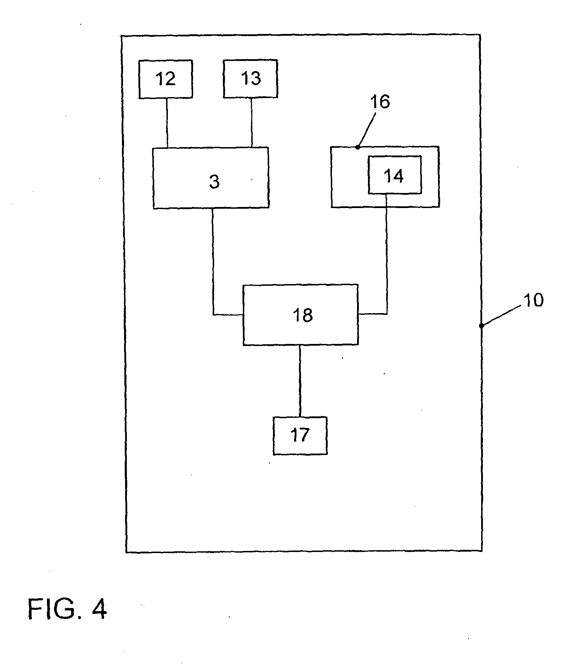

Fig. 4 stellt schematisch ein erfindungsgemäßes Fahrzeug 10 mit einem erfindungsgemäßen Zündschloss oder elektronischem Zündanlassschloss (EZS) 3 dar. Neben dem Zündschloss 3 umfasst das Fahrzeug 10 einen Motor 12, eine Zündung 13, eine Steuerung 18, ein Schaltgetriebe 16 mit einer Kupplung 14 und eine Bremse 17. Wenn beispielsweise bei dem nicht laufenden Motor 12 der Schlüssel 1 in die Position P2r oder P21 nach rechts oder nach links gedreht wird und wenn die Steuerung 18 erfasst, dass die Kupplung 14 getreten betätigt wird, sendet das Zündschloss 3 ein Signal aus, um den Motor 12 zu starten.

Fig. 5 stellt schematisch ein erfindungsgemäßes Fahrzeug 10 mit einem erfindungsgemäßen Zündschloss 3 dar. Dieses in Fig. 5 dargestellte Fahrzeug 10 ist dem in Fig. 4 dargestellten Fahrzeug sehr ähnlich, mit dem einzigen Unterschied, dass anstelle des Schaltgetriebes 16 das in Fig. 5 dargestellte Fahrzeug ein Automatikgetriebe 15 umfasst. Daher überprüft die Steuerung 18 bei dem Fahrzeug 10 der Fig. 5, ob sich das Automatikgetriebe 15 in der Parkstellung befindet und ob die Bremse 17 betätigt wird, und meldet dies dem Zündschloss 3. Wenn diese beiden Bedingungen erfüllt sind und gleichzeitig der Schlüssel 1 für den Fall, dass der Motor 12 nicht läuft, in die Position P2r oder P2l nach rechts oder nach links gedreht wird, sendet das Zündschloss 3 das Signal aus, um den Motor 12 zu starten.

Erfindungsgemäß kann somit der Motor 12 und/oder die Zündung 13 durch Drehen des Schlüssels 1 sowohl nach rechts als auch nach links gestartet werden, ohne dass bei einem Schaltgetriebe das Kupplungspedal bzw. bei einem Automatikgetriebe das Bremspedal niedergedrückt sein muss, d.h. das Starten des Motors bzw. der Zündung ist ohne Pedalbetätigung möglich.

### BEZUGSZEICHENLISTE

- 1: Schlüssel
- 2: Mikroschalter
- 3: Zündschloss
- 4: Rotor
- 5: Winkel
- 6: Schlüsselaufnahme
- 10: Fahrzeug
- 11: Drehrichtung
- 12: Motor
- 13: Zündung
- 14: Kupplung
- 15: Automatikgetriebe
- 16: Schaltgetriebe
- 17: Bremse
- 18: Steuerung
- P0: Position
- P1: Position
- P2r: Position
- P21: Position

## Patentansprüche

1. Verfahren zum Betreiben eines Fahrzeugs,
wobei ein Bedienteil (1) des Fahrzeugs (10) innerhalb des Fahrzeugs (10) manuell gedreht wird, um einen Motor (12) des Fahrzeugs (10) zu starten und/oder eine Zündung (13) des Fahrzeugs (10) zu aktivieren,
**dadurch gekennzeichnet,**
**dass** der Motor (12) und/oder die Zündung (13) sowohl durch Drehen des Bedienteils (1) nach rechts als auch durch Drehen des Bedienteils (1) nach links gestartet werden kann.

2. Verfahren nach Anspruch 1, **dadurch gekennzeichnet, dass** der laufende Motor (12) ausgeschaltet wird, indem das Bedienteil (1) nach rechts oder nach links gedreht wird.

3. Verfahren nach Anspruch 1 oder 2, **dadurch gekennzeichnet, dass** das Bedienteil (1) nicht abziehbar ist, wenn der Motor (12) läuft.

4. Verfahren nach einem der vorhergehenden Ansprüche, **dadurch gekennzeichnet, dass** eine eingeschaltete Zündung (13) des Fahrzeugs (10) ausgeschaltet wird, indem das Bedienteil (1) nach rechts oder nach links gedreht wird.

5. Verfahren nach Anspruch 4, **dadurch gekennzeichnet, dass** das Bedienteil (1) nicht abziehbar ist, wenn die Zündung (13) eingeschaltet ist.

6. Verfahren nach einem der vorhergehenden Ansprüche, **dadurch gekennzeichnet, dass** das Bedienteil (1) automatisch in eine Ausgangslage (P1) zurück gedreht wird, nachdem das Bedienteil (1) manuell gedreht wurde.

7. Verfahren nach einem der vorhergehenden Ansprüche, **dadurch gekennzeichnet, dass** das Bedienteil (1) nur dann drehbar ist, wenn das Bedienteil (1) in eine vorbestimmte Position (P1) eingeschoben ist, und dass durch das Einschieben bis zu der vorbestimmten Position (P1) ein der vorbestimmten Position (P1) entsprechender Betriebszustand des Fahrzeuges (10) erreicht wird.

8. Verfahren nach einem der vorhergehenden Ansprüche, **dadurch gekennzeichnet, dass** der Motor (12) nur dann gestartet wird, wenn beim Drehen des Bedienteils (1) bei einem Automatikgetriebe (15) des Fahrzeugs (10) eine Bremse (17) des Fahrzeugs (10) gedrückt wird und eine Parkstellung eingestellt ist oder wenn beim Drehen des Bedienteils (1) bei einem Schaltgetriebe (16) des Fahrzeugs (10) eine Kupplung (14) des Fahrzeugs (10) getreten ist.

9. Zündschloss für ein Fahrzeug,
welches eine Bedienteilaufnahme (6) zur Aufnahme eines Bedienteils (1) und einen Rotor (4) umfasst,
**dadurch gekennzeichnet,**
**dass** das Zündschloss (3) derart ausgestaltet ist,
• **dass** das Zündschloss (1) ein Signal zum Starten eines Motors (12) des Fahrzeugs (10) und/oder zum Aktivieren einer Zündung (13) des Fahrzeugs (10) ausgibt, wenn der Rotor (4) mittels des Bedienteils (1) nach rechts gedreht wird, und
• **dass** das Zündschloss (3) das Signal zum Starten des Motors (12) und/oder zum Aktivieren der Zündung (13) auch ausgibt, wenn der Rotor (4) mittels des Bedienteils (1) nach links gedreht wird.

10. Zündschloss nach Anspruch 9, **dadurch gekennzeichnet, dass** das Zündschloss (3) zur Durchführung des Verfahrens nach einem der Ansprüche 1-8 ausgestaltet ist.

11. Fahrzeug mit einem Zündschloss nach Anspruch 9 oder 10.

## Claims

1. Method for operating a vehicle,
wherein a control part (1) of the vehicle (10) is turned manually within the vehicle (10) in order to start an engine (12) of the vehicle (10) and/or activate an ignition (13) of the vehicle (10), **characterized in that** the engine (12) and/or the ignition (13) can be started both by turning the control part (1) clockwise and also by turning the control part (1) anticlockwise.

2. Method according to Claim 1, **characterized in that** the running engine (12) is switched off by turning the control part (1) clockwise or anticlockwise.

3. Method according to Claim 1 or 2, **characterized in that** the control part (1) cannot be pulled out while the engine (12) is running.

4. Method according to one of the preceding claims, **characterized in that** an activated ignition (13) of the vehicle (10) is deactivated by turning the control part (1) clockwise or anticlockwise.

5. Method according to Claim 4, **characterized in that** the control part (1) cannot be pulled out while the ignition (13) is activated.

6. Method according to one of the preceding claims, **characterized in that** the control part (1) is automatically turned back into an initial position (P1) after the control part (1) has been turned manually.

7. Method according to one of the preceding claims, **characterized in that** the control part (1) can be turned only when the control part (1) has been pushed in into a predetermined position (P1), and **in that** the pushing-in as far as the predetermined position (P1) has the result that an operating state, which corresponds to the predetermined position (P1), of the vehicle (10) takes effect.

8. Method according to one of the preceding claims, **characterized in that**, if the vehicle (10) has an automatic transmission (15), the engine (12) is started only if a brake (17) of the vehicle (10) is depressed and a park position is set when the control part (1) is turned, or if the vehicle (10) has a manual transmission (16), the engine (12) is started only if a clutch (14) of the vehicle (10) is depressed when the control part (1) is turned.

9. Ignition lock for a vehicle,
which ignition lock comprises a control part receptacle (6) for receiving a control part (1) and comprises a rotor (4),
**characterized**
**in that** the ignition lock (3) is configured such that
• the ignition lock (1) outputs a signal for starting an engine (12) of the vehicle (10) and/or for activating an ignition (13) of the vehicle (10) if the rotor (4) is turned clockwise by means of the control part (1), and
• the ignition lock (3) also outputs the signal for starting the engine (12) and/or for activating the ignition (13) if the rotor (4) is turned anticlockwise by means of the control part (1).

10. Ignition lock according to Claim 9, **characterized in that** the ignition lock (3) is configured for carrying out the method according to one of Claims 1-8.

11. Vehicle having an ignition lock according to Claim 9 or 10.

## Revendications

1. Procédé de fonctionnement d'un véhicule, une partie de commande (1) du véhicule (10) étant tournée manuellement à l'intérieur du véhicule (10) pour faire démarrer un moteur (12) du véhicule (10) et/ou pour activer un allumage (13) du véhicule (10), **caractérisé en ce que** le moteur (12) et/ou l'allumage (13) peuvent être démarrés tant vers la droite par rotation de la partie de commande (1) que vers la gauche par rotation de la partie de commande (1).

2. Procédé selon la revendication 1, **caractérisé en ce que** le moteur (12) en fonctionnement est déconnecté en tournant la partie de commande (1) vers la droite ou vers la gauche.

3. Procédé selon la revendication 1 ou 2, **caractérisé en ce que** la partie de commande (1) ne peut pas être retirée lorsque le moteur (12) tourne.

4. Procédé selon l'une quelconque des revendications précédentes, **caractérisé en ce qu'**un allumage (13) connecté du véhicule (10) est déconnecté en tournant la partie de commande (1) vers la droite ou vers la gauche.

5. Procédé selon la revendication 4, **caractérisé en ce que** la partie de commande (1) ne peut pas être retirée lorsque l'allumage (13) est connecté.

6. Procédé selon l'une quelconque des revendications précédentes, **caractérisé en ce que** la partie de commande (1) tourne automatiquement pour reprendre une position de sortie (P1) une fois la partie de commande (1) tournée manuellement.

7. Procédé selon l'une quelconque des revendications précédentes, **caractérisé en ce que** la partie de commande (1) ne peut être tournée que lorsque la partie de commande (1) est poussée dans une position (P1) prédéfinie et qu'un état de fonctionnement du véhicule (10) correspondant à la position (P1) prédéfinie est atteint du fait de la poussée réalisée jusqu'à la position (P1) prédéfinie.

8. Procédé selon l'une quelconque des revendications précédentes, **caractérisé en ce que** le moteur (12) n'est démarré que lorsqu'un frein (17) du véhicule (10) est comprimé et qu'une position de stationnement est réglée lors de la rotation de la partie de commande (1) en présence d'une boîte de vitesses automatique (15) du véhicule (10) ou lorsqu'un embrayage (14) du véhicule (10) est enfoncé lors de la rotation de la partie de commande (1) en présence d'une boîte de vitesses manuelle (16) du véhicule (10).

9. Interrupteur d'allumage pour un véhicule comprenant un logement de partie de commande (6) permettant de loger une partie de commande (1) et un rotor (4), **caractérisé en ce que** l'interrupteur d'allumage (3) est configuré de telle sorte que :
l'interrupteur d'allumage (1) émet un signal pour démarrer un moteur (12) du véhicule (10) et/ou pour activer un allumage (13) du véhicule (10) lorsque le rotor (4) est tourné vers la droite à l'aide de la partie de commande (1) ; et
l'interrupteur d'allumage (3) émet également le signal de démarrage du moteur (12) et/ou d'activation de l'allumage (13) lorsque le rotor (4) est tourné vers la gauche à l'aide de la partie de commande (1).

10. Interrupteur d'allumage selon la revendication 9, **caractérisé en ce que** l'interrupteur d'allumage (3) est configuré pour mettre en oeuvre le procédé selon l'une quelconque des revendications 1 à 8.

11. Véhicule doté d'un interrupteur d'allumage selon la revendication 9 ou 10.
